(19) Europäisches Patentamt

European Patent Office

Office européen des brevets

(11) **EP 4 318 836 A1**

(12) **EUROPEAN PATENT APPLICATION**

(43) Date of publication:
**07.02.2024 Bulletin 2024/06**

(21) Application number: **22196436.4**

(22) Date of filing: **19.09.2022**

(51) International Patent Classification (IPC):
*H02H 3/40* (2006.01)          *H02H 1/00* (2006.01)
*H02H 7/28* (2006.01)

(52) Cooperative Patent Classification (CPC):
**H02H 3/405;** H02H 1/0092; H02H 7/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2022 IN 202241044825**

(71) Applicant: **Hitachi Energy Ltd
8050 Zürich (CH)**

(72) Inventors:
• **PRADHAN, Vedanta**
  **751024 Bhubaneswar (IN)**
• **GEORGE, Neethu**
  **560049 Karnataka (IN)**
• **NAIDU, OD**
  **560087 Karnataka (IN)**

(74) Representative: **Vossius & Partner
Patentanwälte Rechtsanwälte mbB
Siebertstraße 3
81675 München (DE)**

(54) **DISTANCE PROTECTION FOR AN ELECTRICAL POWER SYSTEM BASED ON ADAPTED APPARENT IMPEDANCE**

(57)     The present disclosure relates to a method for controlling a protection system for an electrical power system comprising a transmission line terminated by a first terminal coupled to a first power source and by a second terminal coupled to a second power source, the method comprising: obtaining a plurality of voltage measurements and a plurality of current measurements of the first terminal; determining phase angle boundaries of a fault current based on the plurality of voltage measurements and the plurality of current measurements; determining a first apparent impedance based on a first phase angle within or at one of the phase angle boundaries starting from the first terminal; determining a second apparent impedance based on a second phase angle within or at one of the phase angle boundaries starting from the first terminal; determining a third apparent impedance and a fourth apparent impedance starting from the first terminal based on the first apparent impedance and the second apparent impedance; and controlling the protection system based on the third apparent impedance and the fourth apparent impedance. The present disclosure also relates to a respective device and computer-readable medium.

FIG.5

**Description**

**Technical Field**

The present disclosure relates to a method, a device, computer-readable medium, and an electrical power system for controlling a protection system for the electrical power system comprising a transmission line.

**Background**

Renewable energy generators, including photovoltaic and wind turbine generators, are called Power Electronics or Inverter Based Resources (IBR), since they are connected to the network fully or partially through power electronic converters. With different structures and control strategies, IBR have different fault characteristics from traditional synchronous generators (SG). Grid codes and Fault Ride Through (FRT) requirements modulate the voltage and current output of an IBR during fault. This in turn poses challenges to the traditional protective relaying principles, which were designed for grids dominated by SGs.

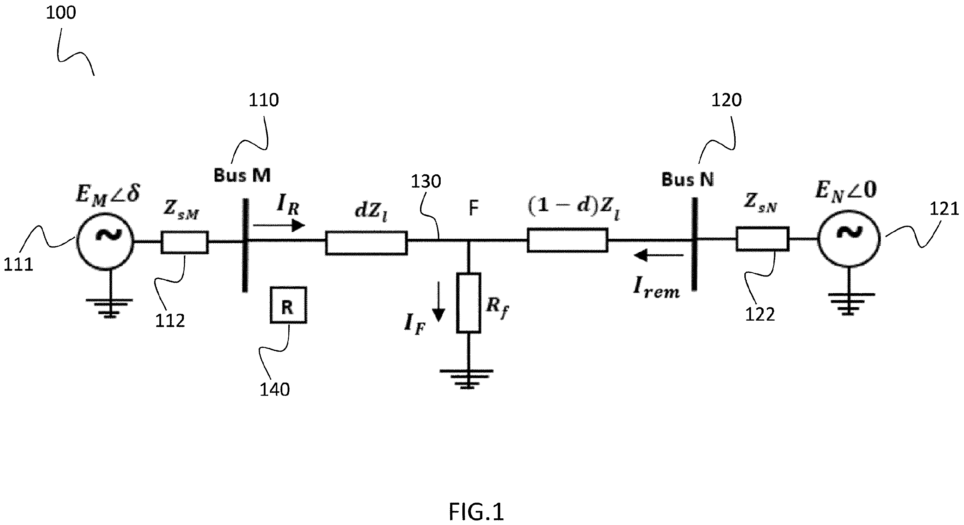

A protection system in an electrical power system comprising a transmission network has traditionally been dominated by the stepped distance protection, with the three zones providing primary as well as back up protection, in a coordinated manner. Distance protection, also known as impedance protection, is based on the principle that the impedance measured at a terminal, using local voltages and currents is indicative of the location of the fault. Fig.1 illustrates a two-port equivalent model of an electrical power system 100 comprising a transmission line 130. The transmission line is terminated at a first end by a first terminal, i.e., bus 'M' 110, coupled to a first power source 111 is terminated at a second end by a second terminal, i.e., bus 'N' 120 coupled to a second power source 121. Source impedance of the first power source 111 is modeled as a first source impedance $Z_{sM}$ 112 being serially coupled to the first power source 111 and bus 'M' 110 and source impedance of the second power source 121 is modeled as a source impedance $Z_{sN}$ 122 being serially coupled to the second power source 121 and bus 'N' 120. The line segment between bus 'M' 110 and bus 'N' 120, also referred hereinafter as the segment 'MN', during a fault occurring at fault location 'F' is modeled in terms of $dZ_{1L}$, $(1 - d)Z_{1L}$, and $R_F$. Hereinafter, the first source 111 is also referred to as a local source 111 and the second source 121 is also referred to as a remote source 121. The electrical power system 100 further comprises a relay 'R' 140 which may be placed at, in, or on or associated with the terminal Bus 'M' 110. The relay 'R' 140 may comprise measuring devices, in particular current and potential transformers (CT & PT), measuring voltage at and current through bus 'M' 110. The voltage at and current through bus 'M' 110 may also or otherwise be obtained, for instance by other measuring means.

For the fault at location 'F' on the segment 'MN', measured apparent impedance seen from bus 'M' looking into the segment 'MN' may be determined as follows:

$$Z_R = \frac{V_R}{I_R} \tag{1}$$

wherein $V_R$ and $I_R$ denote predefined voltage and current, respectively. $V_R$ and $I_R$ may be derived from the voltage at and current through bus 'M' 110, in particular according to formulae defined for each fault-type. When the fault is a bolted short circuit, i.e., when the fault resistances $R_f$ is zero, the measured apparent impedance $Z_R$ corresponds, i.e., equal, to the faulted line segment impedance $dZ_l$ as it is the only impedance which opposes the relay current flowing between bus 'M' 110 and the earth ground potential through the fault. Here, '$d$' is the per unit distance of the fault from bus 'M' 110 and $Z_l$ is the impedance of the transmission line 130.

This may be however not true for the case of a resistive fault as the fault point on the transmission line 130 may no longer be at the earth ground potential. Therefore, $V_R$ and $I_R$ may be related via a more complex relationship in terms of faulted line segment impedance $dZ_{1L}$, fault resistance $R_F$, the fault voltage $V_F$, the fault current $I_F$ or the current contribution $I_{rem}$ from the remote side bus 'N' 120 to the fault. The measured relay impedance may be described according to a first approach to further comprise an additional deviation term $\Delta Z_R$ as follows:

$$Z_R = dZ_{1L} + \Delta Z_R = dZ_{1L} + \frac{V_F}{I_R} = dZ_{1L} + \frac{I_F}{I_R} R_F = dZ_{1L} + \frac{(I_R + I_{rem})}{I_R} R_F \tag{2}$$

wherein $\Delta Z_R$ approaches to be a real number, as the angles of $I_F$ and $I_R$ approach to a same value. This may be true for grids dominated by synchronous generators, where an electrical power system is predominantly homogenous, that is, the phase angles of the transmission line 130, remote source impedance 122, and local source impedance 112 are very close to each other, e.g. 0° to 15°, more particularly 5° to 10°. In such case, $\Delta Z_R$, which may be majorly resistive, may be accounted for in the resistive reach of the traditional quadrilateral characteristic, to ensure reliability of protection.

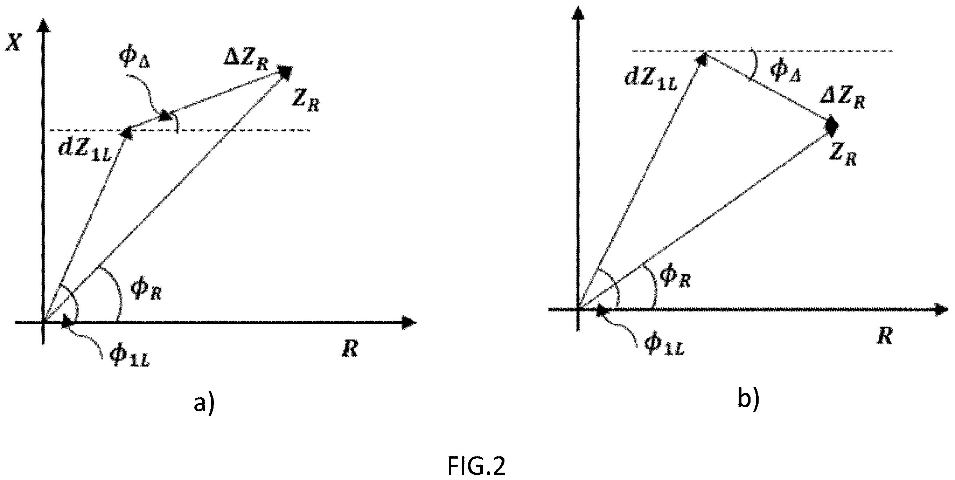

However, with increased penetration of IBR in the grid, the electrical power system has become increasingly non-homogenous. When the local source 111 is an unconventional power source, e.g., an IBR, the output current angles are highly modulated from the output current angles obtained when the local source 111 is a synchronous source, and hence the difference between angles of $I_F$ and $I_R$ ($\emptyset_\Delta$) may not be small anymore (e.g. $\emptyset_\Delta$ is not within 0° to 15°, more particularly 5° to 10°.). The unconventional power source may be equivalent to an asynchronous power source including an IBR. Consequently, the term $\dfrac{I_F}{I_R}$ in eq.(2) may have a larger angle and the deviation impedance term $\Delta Z_R$ may not be resistive in nature anymore. This causes large error in the apparent resistance as well as reactance calculated according to the first approach. Fig.2 illustrates a method, in particular the first approach, for an apparent impedance calculation. In particular FIG.2a) and FIG.2b) illustrate the computation of the apparent impedance $Z_R$ on the complex plane when the deviation impedance is inductive and capacitive, respectively. The error increases as fault resistance $R_F$ increases. This is demonstrated below using an illustrative fault case.

**Illustrative case**: Zone 1 phase-A-to-ground (A-g) fault on the segment 'MN': An A-g fault at a distance of 20% on the segment 'MN' from bus 'M' 110 (i.e., $d$ = 0.2 pu) with $R_F$ = 20 $\Omega$.

The apparent impedance, $Z_R$, may be computed as follows:

$$Z_R = \frac{V_R}{I_R} = \frac{V_{AM}}{I_{AM} + K_o I_o} = dZ_{1L} + \left(\frac{I_F}{I_{AM} + K_o I_o}\right) R_F \qquad (3)$$

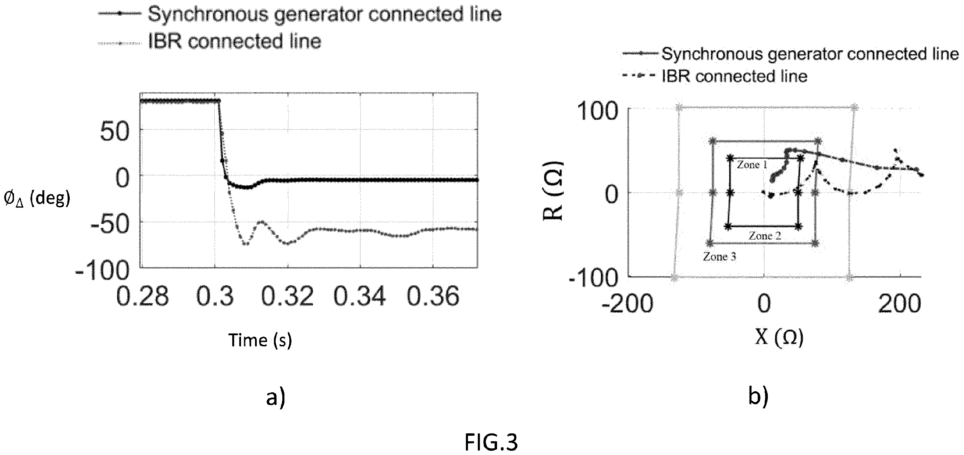

wherein $V_{AM}$ and $I_{AM}$ are phase-A voltage and current phasors at bus 'M' 110, respectively, $I_0$ is zero sequence current at bus 'M' 110, and, $R_F$ is the fault resistance. $dZ_{1L}$ may be the line impedance till fault point, $Z_F$. Fig.3a) shows the angle difference $\emptyset_\Delta$ between the fault current $I_F$ and relay current ($I_{Am} + K_0 I_0$). Fig.3b) shows the plot of apparent impedance trajectory. For comparison purposes, the figures include data points measured while the first power source is an IBR and further data points measured while the first power source is a synchronous generator with the same capacity as the IBR, replacing the IBR.

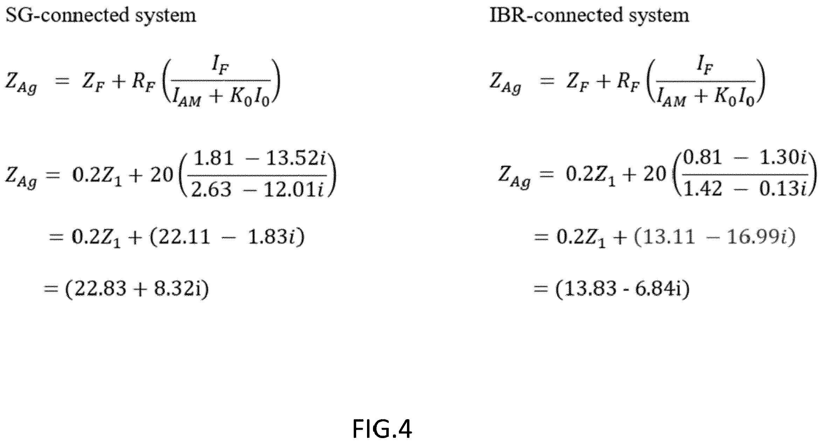

As seen from Fig.3a), the absolute value of $\emptyset_\Delta$ after a fault at around $t=0.3s$ is higher (approx. -60°) for the IBR-connected system when compared to the SG-connected system (approx. -50°). Substituting the variables into eq.(3) yields the apparent impedances, for IBR-connected and SG-connected systems, computed according to the first approach, as summarized in Fig.4. The actual fault impedance is 0.71 + 10.15$i$. The apparent impedance calculated for the SG-connected and IBR-connected systems are 22.83 + 8.32$i$ and 13.83 - 6.84$i$, respectively. In this case, the reactance shift for the IBR-connected system is -16.99$\Omega$, as compared to -1.83$\Omega$ for the SG-connected system.

Thus, one may understand that the performance of the first approach is impacted when applied to IBR-connected transmission lines. Existing distance protection philosophy which is designed for SG-connected lines, operates accurately since SG-connected systems are homogeneous. The controlled power electronic converter based current contribution from IBR results in non-homogeneity and causes incorrect apparent impedance calculation. The error is higher for faults with higher fault resistance. The error in apparent impedance can be inductive or capacitive in nature depending on the phase angle of the IBR output current, and hence the distance relay can overreach or underreach.

## Summary

Thus, there is a need to improve a method, device, and computer-readable medium for controlling a protection system for an electrical power system.

The present disclosure relates to a method for controlling a protection system for an electrical power system comprising a transmission line terminated by a first terminal coupled to a first power source and by a second terminal coupled to a second power source, the method comprising: obtaining a plurality of voltage measurements and a plurality of current measurements of the first terminal; determining phase angle boundaries of a fault current based on the plurality of voltage measurements and the plurality of current measurements; determining a first apparent impedance based on a first phase angle within or at one of the phase angle boundaries starting from the first terminal; determining a second apparent impedance based on a second phase angle within or at one of the phase angle boundaries starting from the first terminal; determining a third apparent impedance and a fourth apparent impedance starting from the first terminal based on the first apparent impedance and the second apparent impedance; and controlling the protection system based on the third apparent impedance and the fourth apparent impedance.

According to an embodiment, wherein the phase angle boundaries of the fault current are determined based on a phase angle of the fault current, wherein the phase angle of the fault current is dependent on a fault location, wherein the fault current is a complex number, and wherein the phase angle of the fault current is an angle, phase, or argument of the fault current, in particular measured during the fault.

According to an embodiment, the phase angle boundaries are or comprise a minimum and a maximum phase angle of the fault current for a fault occurring within a segment of the transmission line between the first terminal and the second terminal.

According to an embodiment, the first phase angle is determined based on a first parameter, in particular a preset distance between the first terminal and a first location on the transmission line, and wherein the second phase angle is determined based on a second parameter, in particular a preset distance between the first terminal and a second location on the transmission line different from the first location.

According to an embodiment, the first phase angle is the minimum phase angle of the fault current, and wherein the second phase angle is the maximum phase angle of the fault current.

According to an embodiment, the method further comprises determining a source impedance of the second power source based on the plurality of voltage measurements and the plurality of current measurements of the first terminal, wherein the determining the first apparent impedance and the determining the second apparent impedance are based on the source impedance of the second power source.

According to an embodiment, the source impedance of the second power source is determined based on the plurality of voltage measurements and the plurality of current measurements obtained before a fault instance.

According to an embodiment, the first power source is one of a grid, a synchronous power source, an unconventional power source, in particular an inverter based resource, and wherein the second power source is a synchronous power or a grid with at least one synchronous power source and/or at least one unconventional power source.

According to an embodiment, the method further comprises determining an impedance of the first power source after a fault instance based on the plurality of voltage measurements and the plurality of current measurements obtained before and after the fault instance, wherein determining the first apparent impedance and the second apparent impedance are based on the impedance of the first power source.

According to an embodiment, the determining the third apparent impedance and the fourth apparent impedance is or comprises summing the first apparent impedance and the second apparent impedance , in particular linearly, more particularly with a first weight scaling the first apparent impedance and a second weight scaling the second apparent impedance, wherein the first weight is different from the second weight.

According to an embodiment, the method further comprises determining a fifth apparent impedance based on the third apparent impedance and the fourth apparent impedance, in particular on a first ratio of the third apparent impedance to a line impedance of the transmission line and a second ratio of the fourth apparent impedance to the line impedance of the transmission line, wherein the protection system is controlled based on the fifth apparent impedance.

According to an embodiment, at least one voltage measurement of the plurality of voltage measurements of the first terminal is measured before a fault instance and/or at least one voltage measurement of the plurality of voltage measurements of the first terminal is measured after the fault instance.

According to an embodiment, at least one current measurement of the plurality of current measurements of the first terminal is measured before a fault instance and/or at least one current measurement of the plurality of current measurements of the first terminal is measured after the fault instance.

The present disclosure also relates to a device for controlling a protection system for an electrical power system comprising a transmission line terminated by a first terminal coupled to a first power source and by a second terminal coupled to a second power source, the device comprising a processor being configured to: obtain a plurality of voltage measurements and a plurality of current measurements of the first terminal; determine phase angle boundaries of a fault current based on the plurality of voltage measurements and the plurality of current measurements; determine a first apparent impedance based on a first phase angle within or at one of the phase angle boundaries starting from the first terminal; determine a second apparent impedance based on a second phase angle within or at one of the phase angle boundaries starting from the first terminal; determine a third apparent impedance and a fourth apparent impedance starting from the first terminal based on the first apparent impedance and the second apparent impedance; and control the protection system based on the third apparent impedance and the fourth apparent impedance.

According to an embodiment, the processor is further configured to perform the method of any one of the above-described embodiments.

The present disclosure also relates to a computer-readable medium, for controlling a protection system for an electrical power system, carrying instructions to perform the method of any one of the above-described embodiments.

The present disclosure further relates to an electrical power system comprising a transmission line, the device of any one of the above-described embodiments, and a computer-readable medium of any one of the above-described embodiments.

Various exemplary embodiments of the present disclosure are directed to providing features that will become readily apparent by reference to the following description when taken in conjunction with the accompanying drawings.

In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

**Brief Description of the Drawings**

Fig.1 illustrates a two-port equivalent model of an electrical power system, in particular a network, comprising a transmission line.

Fig.2 illustrates a method for an apparent impedance calculation.

Fig.3 illustrates angular difference and apparent impedance trajectory of apparent impedances calculated according to the method disclosed in Fig.2.

Fig.4 illustrates numerical performances of apparent impedances calculated according to the method disclosed in Fig.2.

Fig.5 illustrates a flowchart of a method according to an embodiment of the present disclosure.

Fig.6 illustrates a flowchart of a method according to an embodiment of the present disclosure.

Fig.7 illustrates an electrical power system, in particular a network, comprising an unconventional power source according to an embodiment of the present disclosure.

Fig.8 illustrates a graphical representation of a range of apparent impedance calculated according to an embodiment of the present disclosure.

Fig.9 illustrates an electrical power system, in particular a network, comprising an unconventional power source according to an embodiment of the present disclosure.

Fig.10 illustrates measurements at a point-of-connection and source impedances of a remote power source during a single event in the unconventional power source.

Fig.11 illustrates source impedances of a remote power source during multiple events in the unconventional power source.

Fig.12 illustrates a summary of numerical results of the apparent impedances calculated according to various methods, including the method according to an embodiment of the present disclosure.

Fig.13 illustrates graphical representation of the apparent impedances calculated according to various methods, including the method according to an embodiment of the present disclosure.

Fig.14 illustrates a summary of numerical results of the apparent impedances calculated according to various methods, including the method according to an embodiment of the present disclosure.

Fig.15 illustrates graphical representation of the apparent impedances calculated according to various methods, including the method according to an embodiment of the present disclosure.

Fig.16 illustrates a device, a computer-readable medium, and an electrical power system according to an embodiment of the present disclosure.

**Detailed Description of the Disclosure**

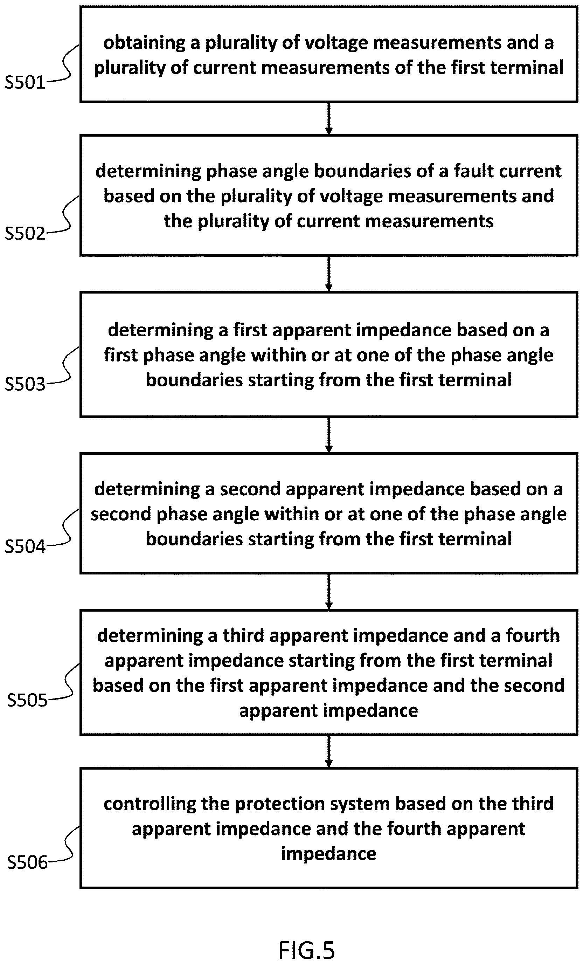

Fig.5 illustrates a flowchart of a method according to an embodiment of the present disclosure. At S501, a plurality of voltage measurements and a plurality of current measurements of the first terminal are obtained. At S502, phase angle boundaries of a fault current are determined based on the plurality of voltage measurements and the plurality of current measurements. At S503, a first apparent impedance is determined based on a first phase angle within or at one of the phase angle boundaries starting from the first terminal. At S504, a second apparent impedance is determined based on a second phase angle within or at one of the phase angle boundaries starting from the first terminal. At S505, a third apparent impedance and a fourth apparent impedance are determined starting from the first terminal based on the first apparent impedance and the second apparent impedance. At S506, the protection system is controlled based on the third apparent impedance and the fourth apparent impedance.

A protection system may be a system which detects faults or abnormal operation conditions and initiates corrective actions. A protection system may be a distance protection for a transmission line within an electrical power system.

Transmission line may be a cable or other structure carrying electrical energy, in particular by conducting electromagnetic waves, in an electrical power system.

Terminal may be an electrical connector terminates a first electrical cable and connects to a second electrical cable, thereby transferring electrical current from/to therebetween.

Phase angle boundaries may be limits of a phase angle describing a minimum and a maximum of a angle, phase, or argument of a complex number or a phase shift between two signals.

Fault current may be an electrical current flowing through a circuit during an electrical fault condition.

Apparent impedance may be a ratio between the voltage and current in an injection point of a circuit.

Source impedance may be an impedance, in particular an equivalent impedance, of a source, in particular a power source.

Fault instance may be a time instance at which a fault occurs.

According to an embodiment, wherein the phase angle boundaries of the fault current are determined based on a phase angle of the fault current, wherein the phase angle of the fault current is dependent on a fault location, wherein the fault current is a complex number, and wherein the phase angle of the fault current is an angle, phase, or argument of the fault current, in particular measured during the fault.

According to an embodiment, a plurality of voltage measurements and a plurality of current measurements comprise or are measurements of each phase of a plurality of phases, in particular three phases, transmitted over the transmission line.

According to an embodiment, the method illustrated in Fig.5 is applicable for all fault types, in particular including a single-phase-to-ground fault, phase-to-phase fault, phase-to-phase-to-ground fault, and three-phases-to-ground fault.

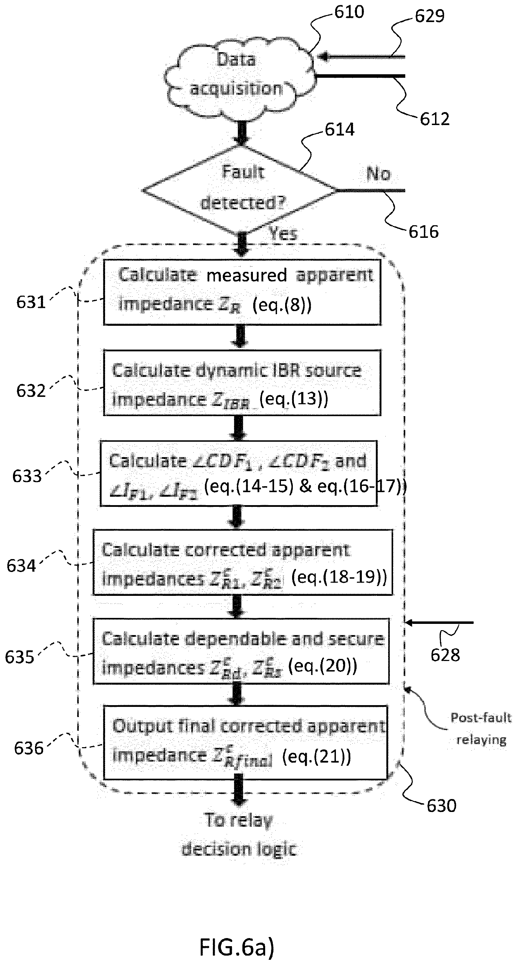

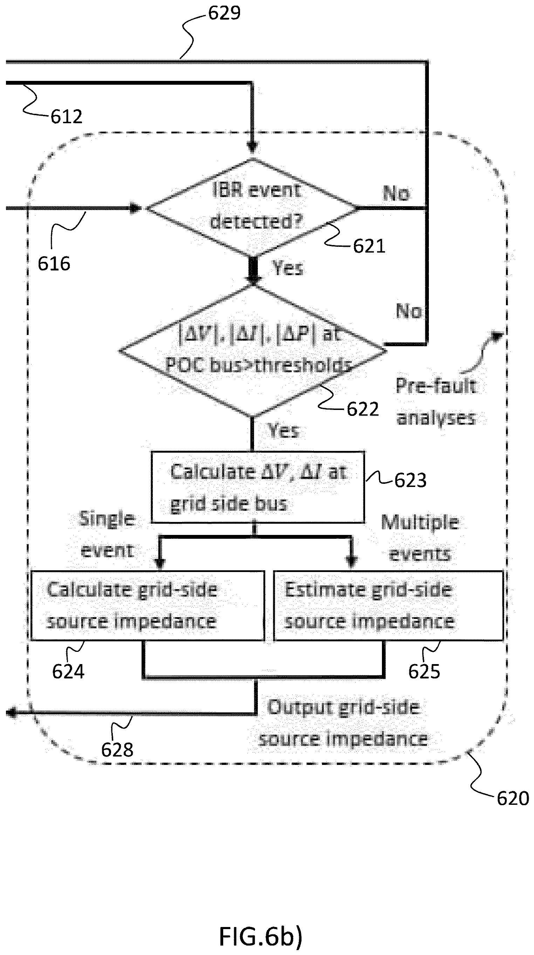

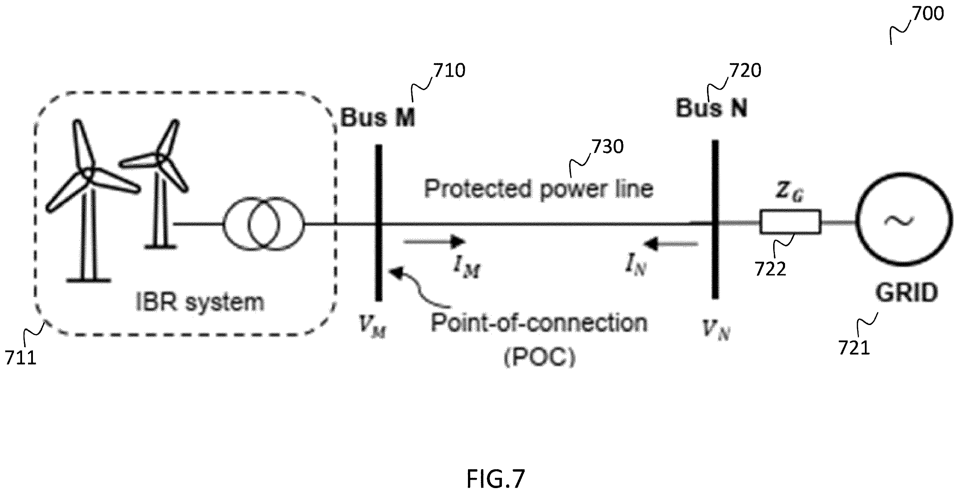

Fig.6 illustrates a flowchart of a method according to an embodiment of the present disclosure. The flowchart of Fig.6 considers an exemplary electrical power system 700 of Fig.7, thus makes a reference thereto. The electrical power system 700 comprises protected power line 730 terminated by a first terminal, i.e., bus 'M' 710 coupled to a first power source, i.e., IBR system 711, and by a second terminal, i.e. bus 'N' 720 coupled to a second power source, i.e., grid 721. It is understood by the skilled person that the first terminal is merely an exemplary component serving an illustrative purpose and that the protected power line may be terminated by means different from the first terminal. Similarly, it is also understood by the skilled person that the second terminal is merely an exemplary component serving an illustrative purpose and that the protected power line may be terminated by means different from the second terminal.

An electrical power system may be a network of power devices coupled via transmission lines for power transmission. A power device may be a power source, a power consumer, or a grid. A power source may be an electrical device supplying an electrical energy to an electrical load, in particular by converting one form of an energy to another. A power source may be a synchronous generator or an asynchronous generator, also referred to as an unconventional power source.

Source impedance of the second power source 721 is modeled as a second source impedance $Z_G$ 722 being serially coupled to the second power source 721. The first source may be any of other unconventional power source, i.e., other than the IBR, a synchronous power source, or a grid comprising an unconventional power source and/or a synchronous power source. The unconventional power source may be equivalent to an asynchronous power source including an IBR. The second source may be a synchronous power source or a grid comprising a synchronous power source and/or an unconventional power source . According to an embodiment, the first power source is one of a grid, a synchronous power source, an unconventional power source, in particular an inverter based resource, and wherein the second power source is a synchronous power or a grid with at least one synchronous power source and/or at least one unconventional power source. Although omitted for simplicity, the electrical power system 700 may further comprise a relay 'R' which may be placed at, in, or on or associated with the terminal Bus 'M' 710. The relay 'R' may comprise measuring devices, in particular current and potential transformers (CT & PT), measuring voltage at and current through bus 'M' 710. The voltage at and current through bus 'M' 710 may also or otherwise be obtained, for instance by other measuring means. The electrical power system 700 may further comprise a device, in particular an intelligent electronic device (IED) which may be placed at, in, or on, or associated with the terminal Bus 'M' 710. The IED may be the relay 'R'. The IED may be a computer-readable device being configured to perform the method of the embodiment shown in Fig.6. In reference to Fig.6, the first power source, the second power source, and the second power source impedance are hereinafter referred to as an IBR system, a grid side source, and a grid side source impedance.

According to an embodiment, at least one voltage measurement of the plurality of voltage measurements of the first terminal is measured before a fault instance and/or at least one voltage measurement of the plurality of voltage measurements of the first terminal is measured after the fault instance.

According to an embodiment, at least one current measurement of the plurality of current measurements of the first terminal is measured before a fault instance and/or at least one current measurement of the plurality of current measurements of the first terminal is measured after the fault instance.

The embodiment of Fig.6 comprises two parts: (i) the pre-fault analysis 620 of grid side source impedance as shown in Fig.6b) and (ii) the post-fault analysis 630 for calculating the corrected apparent impedance seen from bus 'M' 710, as shown in Fig.6a). Data, e.g. voltage and/or current measurements of bus 'M' 710 is acquired 610. In the pre-fault analysis 620, the grid side equivalent source impedance 722 is evaluated and estimated, based on the acquired data 612 obtained before a fault, as detected at 614. The output grid-side source impedance 628 is fed to and used by the post-fault analysis 630 in computing the corrected apparent impedance seen from bus 'M' 710 in case of a fault. The detailed description of the pre-fault analysis 620 and the post-fault analysis 630 are given below.

Pre-fault analysis 620 of grid side source impedance:

IBR event is detected at 621 based on the acquired data 612, in particular voltage and current measurements of the first terminal, and/or on negative output 616 of the fault detection at 614, i.e., when the fault is not detected. An event may be any change within the IBR system 711 which leads to a change in the power injected from the IBR system 711 into the network.

According to an embodiment, in a wind park, an event may include outage/incoming of wind turbine units, change in wind speed, cut-in/cut-out events, or the like. Staged probing by intentional modification of inverter current references may also be used. Resultantly, the current injected by the IBR into the grid via the connecting power line(s) may be momentarily changed. Such a staged event may be used to estimate the grid side equivalent parameters. A credible event may be identified at 622 based on the change in power, voltage, and/or current bus 'M' 710, in particular by comparing the parameters to certain threshold levels. Such changes can also be correlated with event flags/signals communicated from the IBR side as well, in particular if the communication between the IBR side and the point of connection, e.g. bus 'M', exists. According to an embodiment, change in electrical parameters of voltage, current, and/or power observed at bus 'M' 710 and a concurrent change in the wind speed indicated by an anemometer reading of the park can be used as a credible IBR event.

A change in current injection from bus 'M' 710 into the protected transmission line 730 may be considered as a change in the current injected at bus 'N' 720 through the protected transmission line 730. This change in injected current induces a change in the voltage at bus 'N' 720. While the voltage and current measurements of bus 'M' 710 may be obtained, the voltage and current parameters at bus 'N' 720 are not readily available in the absence of a dedicated communication link between the bus 'M' 710 and bus 'N' 720. However, the voltage and current parameters at bus 'N' 720 may be calculated at 623 from the available voltage and current measurements of bus 'M' 710 as follows:

$$\begin{bmatrix} \Delta V_N \\ \Delta I_N \end{bmatrix} = \begin{bmatrix} A & B \\ C & D \end{bmatrix} \begin{bmatrix} \Delta V_M \\ \Delta I_M \end{bmatrix} \qquad (4)$$

wherein, the matrix $\begin{bmatrix} A & B \\ C & D \end{bmatrix}$ describes a model of the protected transmission line 730 and may be derived from the parameters of the protected transmission line 730 in particular, a resistance, inductance, and capacitance per unit length. The symbol $\Delta$ denotes a change with respect to the steady-state value, i.e., value of the entity before occurrence of the IBR event. The grid side source impedance 722 may be calculated at 624 in case of a single event as follows:

$$Z_G = -\frac{\Delta V_N}{\Delta I_N} \qquad (5)$$

The grid side parameters, in particular the equivalent source voltage of the IBR, i.e., $E_M\angle\delta$ of Fig. 1, could be a continuously varying parameter due to the random nature of system loading, i.e., load in a power system changes continuously and so does the source equivalent of the grid. The source equivalent may be estimated based on an over-determined set of equations resulting from multiple events. Thus, the source impedance calculation may be formulated as a least squares approximation. The least squares estimate at 624 in case of a multiple events may estimate the grid side source impedance 722 more accurately under noisy practical conditions with respect to the calculation at 624. The least squares formulation based on $p$ events may be expressed as follows:

$$\begin{bmatrix} real(Z_G) \\ imag(Z_G) \end{bmatrix} = \begin{bmatrix} A_1 \\ A_2 \\ \vdots \\ A_p \end{bmatrix}^{-1} \begin{bmatrix} b_1 \\ b_2 \\ \vdots \\ b_p \end{bmatrix} \qquad (6)$$

wherein $p$ is a natural number larger than 1 and wherein $A_i$ and $b_i$ are defined for the $i^{th}$ event as follows:

$$A_i = \begin{bmatrix} real(\Delta I_{Ni}) & -imag(\Delta I_{Ni}) \\ imag(\Delta I_{Ni}) & real(\Delta I_{Ni}) \end{bmatrix}, \qquad b_i = \begin{bmatrix} real(\Delta V_{Ni}) \\ imag(\Delta V_{Ni}) \end{bmatrix} \qquad (7)$$

Both calculation and estimation procedures described above may be implemented on a window of data post the IBR event. For example, a 0.2-second-long data window post the IBR event may be chosen. Estimation of the grid side source impedance 722 may be carried out for each data point in the window. A final estimate for that data window may be obtained as an average of the estimates obtained for each data point. In doing so, the grid side source impedance estimate 628 is obtained based, in particular solely, on measurements available at bus 'M' 710 and may be included in the process for accurate computation of the corrected apparent impedance seen from bus 'M' 710, especially for transmission lines connecting IBR systems 711.

Post-fault analysis 630 (reach element):

Post-fault analysis 630 obtains measurements, in particular voltage and current measurements of bus 'M' 710 obtained before and after a fault occurrence instance, and the estimate of grid-side source impedance 628. After fault detection at 614, the measured apparent impedance $Z_R$ is calculated at 631 according to eq.(8). Note the term "fault detection" in distance relaying may imply an identification of the fault event from a normal loading condition based on voltage and/or current measurements. Reach may be a measured apparent impedance at a measuring location on the transmission line or within a terminal terminating the transmission line, in particular by a relay, in case of a fault. An under reach may be the case when the relay measures the more impedance than the actual value, in particular an apparent impedance seen from the relay, which may lead the relay to not operate for in zone faults. An overreach may be the case when the relay measures the less impedance than the actual value, in particular an apparent impedance seen from the relay, which may lead the relay to operate for out of zone faults.

$$Z_R = \frac{V_R}{I_R} \qquad (8)$$

The measured apparent impedance may deviate from the actual apparent impedance seen from the observing point caused by a fault, in particular the fault without any other effect affecting the apparent impedance. The main challenge lies in obtaining an apparent impedance which is corrected for the remote infeed effect, as a corrected apparent impedance is supposed to be a better measure of the faulted line segment impedance. The corrected apparent impedance $Z_R^c$ may be determined as follows:

$$Z_R^c = \frac{|Z_R| sin(\phi_R - \angle I_F + \angle I_R)}{sin(\phi_{1L} - \angle I_F + I_R)} e^{j\phi_{1L}} \qquad (9)$$

wherein, $\phi_R$ and $\phi_{1L}$ denote phase angle of the apparent impedance $Z_R$ and phase angle of the impedance of the transmission line, respectively. In eq.(9), the only unknown is the angle of the fault current $I_F$. The fault current $I_F$ is not measurable. It may however be expressed in terms of the incremental relay current $\Delta I_R$ as follows:

$$I_F = \Delta I_R \times CDF \qquad (10)$$

wherein $CDF$ denotes a current distribution factor, which is given as follows:

$$CDF = \frac{Z_{IBR} + Z_L + Z_G}{(1 - d)Z_L + Z_G} \qquad (11)$$

wherein, $\Delta I_R$ denotes the difference between the current measured by the relay 'R' after and before the fault, $Z_L$ denotes impedance of the protected transmission line 730, $Z_G$ denotes the grid side source impedance, and $Z_{IBR}$ denotes the modeled source impedance of the IBR system being serially coupled to the modeled voltage source of the IBR system.

Therefore, from eq.(10) angle of the fault current $I_F$ may be expressed as follows:

$$\angle I_F = \angle \Delta I_R + \angle CDF \qquad (12)$$

The incremental relay current $\Delta I_R$ can be obtained, as the relay current $I_R$ is a measured quantity, whereas the phase angle of $CDF$ may be calculated. $Z_{IBR}$ may be computed at 632 dynamically post-fault as follows: .

$$Z_{IBR} = -\frac{\Delta V_M}{\Delta I_M} \qquad (13)$$

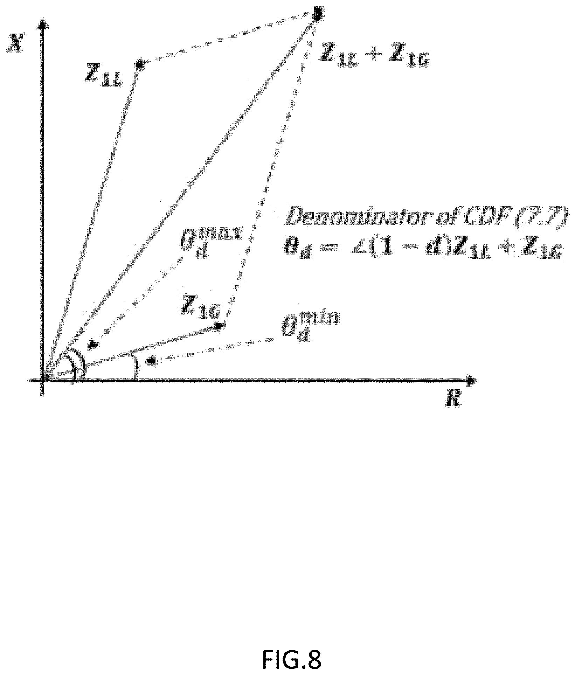

wherein $\Delta$ represents change with respect to a value before the fault occurred. Accordingly, the numerator of eq.(11) and hence its phase angle may be dynamically computed during the fault, as $Z_L$ is available as an input and $Z_G$ is estimated at 620. However, the denominator term $(1 - d)Z_L + Z_G$ of eq.(11) remains unknown, as the location '$d$' of the fault is not known a priori. In reference to Fig.8, which illustrates a graphical representation of a range of apparent impedance calculated according to an embodiment of the present disclosure, it may be inferred that for a fault on the protected transmission line 730, the phase angle of the denominator term of eq.(11) may lie only within a feasible range. For a fault towards the remote end of the line, i.e., $d = 1$, the phase angle is dictated by the phase angle of the grid side source impedance $Z_G$ 720. For a close-in fault, i.e., $d = 0$, the phase angle is determined by the phase angle of the sum of grid side source impedance $Z_G$ 720 and the line impedance $Z_L$ of the protected transmission line 730. Based on the above-described inference, the corrected apparent impedance is calculated, as detailed below.

Two $CDFs$ may be calculated at 633 as follows:

$$\angle CDF_1 = \angle \frac{Z_{IBR} + Z_L + Z_G}{Z_L + Z_G} \qquad (14)$$

$$\angle CDF_2 = \angle \frac{Z_{IBR} + Z_L + Z_G}{Z_G} \qquad (15)$$

to each $CDF$ above, two angles for fault current are obtained as follows:

$$\angle I_{F1} = \angle \Delta I_R + \angle CDF_1 \qquad (16)$$

$$\angle I_{F2} = \angle \Delta I_R + \angle CDF_2 \qquad (17)$$

The CDFs of eq.(14) and eq.(15) may be computed based on the unit distance $d$ satisfying $0 \le d \le 1$.

According to an embodiment, the phase angle boundaries are or comprise a minimum and a maximum phase angle of the fault current for a fault occurring within a segment of the transmission line between the first terminal and the second terminal.

According to an embodiment, the first phase angle is determined based on a first parameter, in particular a preset distance between the first terminal and a first location on the transmission line, and wherein the second phase angle is determined based on a second parameter, in particular a preset distance between the first terminal and a second location on the transmission line different from the first location.

According to an embodiment, the first phase angle is the minimum phase angle of the fault current, and wherein the second phase angle is the maximum phase angle of the fault current.

Using fault current angles $\angle I_{F1}$ and $\angle I_{F2}$ so obtained, two corrected apparent impedances $Z_{R1}^{c}$ and $Z_{R2}^{c}$ are calculated at 634 by substituting the parameters into eq.(9) as follows:

$$Z_{R1}^{c} = \frac{|Z_R| sin(\phi_R - \angle I_{F1} + \angle I_R))}{sin(\phi_{1L} - \angle I_{F1} + \angle I_R)} e^{j\phi_{1L}} \qquad (18)$$

$$Z_{R2}^{c} = \frac{|Z_R| sin(\phi_R - \angle I_{F2} + \angle I_R))}{sin(\phi_{1L} - \angle I_{F2} + \angle I_R)} e^{j\phi_{1L}} \qquad (19)$$

Since, for a fault on the protected transmission line 730, the denominator term $(1 - d)Z_L + Z_G$ of eq.(11) can lie only within the feasible region, including the boundaries of the region, as shown in Fig.8, the final solution for the corrected apparent impedance also can only lie within $Z_{R1}^{c}$ and $Z_{R2}^{c}$. A final solution may be determined as a weighted average of the solutions $Z_{R1}^{c}$ and $Z_{R2}^{c}$ as follows:

$$Z_R^{c} = W_d \times Z_{R1}^{c} + W_s \times Z_{R2}^{c} \qquad (20)$$

wherein $W_d$ and $W_s$ are scaling factors for $Z_{R1}^{c}$ and $Z_{R2}^{c}$, respectively. The sum of the scaling factors $W_d$ and $W_s$ may satisfy $W_d + W_s = 1$. A dependable solution $Z_{Rd}^{c}$ is obtained at 635 if $W_d > W_s$ and a secure solution $Z_{Rs}^{c}$ is obtained at 635 if $W_s > W_d$. The solutions $Z_{Rd}^{c}$ and $Z_{Rs}^{c}$ may be used at 636 collectively to arrive at a decisive solution. If both $Z_{Rd}^{c}$ and $Z_{Rs}^{c}$ indicate the fault to be located in the first half segment of the protected transmission line 730, then $Z_{Rd}^{c}$ can be considered as the final solution. If they together indicate the fault in second half segment of the protected transmission line 730, then $Z_{Rs}^{c}$ may be considered as the final solution. If neither of these conditions hold, then the final solution may be considered as an average of $Z_{Rd}^{c}$ and $Z_{Rs}^{c}$. The above statement is summarized as follows:

$$Z_{R,final}^c = \begin{cases} Z_{Rd}^c, & if\ \dfrac{|Z_{Rd}^c|}{|Z_L|} \leq 0.5\ AND\ \dfrac{|Z_{Rs}^c|}{|Z_L|} \leq 0.5 \\[2ex] Z_{Rs}^c, & if\ \dfrac{|Z_{Rd}^c|}{|Z_L|} > 0.5\ AND\ \dfrac{|Z_{Rs}^c|}{|Z_L|} > 0.5 \\[2ex] 0.5 \times (Z_{Rd}^c + Z_{Rs}^c), & otherwise \end{cases} \qquad (21)$$

The computed final corrected apparent impedance $Z_{R,final}^c$ may be fed into a device, a controller, a computer-readable medium, a relay, a relay decision logic, or the like to further process and/or determine the fault location and/or control a protection system for an electrical power system.

According to an embodiment, $Z_{R1}^c$ and $Z_{R2}^c$ are the first apparent impedance and the second apparent impedance, respectively.

According to an embodiment, the method further comprises determining a source impedance of the second power source based on the plurality of voltage measurements and the plurality of current measurements of the first terminal, wherein the determining the first apparent impedance and the determining the second apparent impedance are based on the source impedance of the second power source.

According to an embodiment, the source impedance of the second power source is determined based on the plurality of voltage measurements and the plurality of current measurements obtained before a fault instance.

According to an embodiment, the method further comprises determining an impedance of the first power source after a fault instance based on the plurality of voltage measurements and the plurality of current measurements obtained before and after the fault instance, wherein determining the first apparent impedance and the second apparent impedance are based on the impedance of the first power source.

According to an embodiment, $Z_{Rd}^c$ and $Z_{Rs}^c$ are the third apparent impedance and the fourth apparent impedance, respectively.

According to an embodiment, the determining the third apparent impedance and the fourth apparent impedance is or comprises summing the first apparent impedance and the second apparent impedance , in particular linearly, more particularly with a first weight scaling the first apparent impedance and a second weight scaling the second apparent impedance, wherein the first weight is different from the second weight.

According to an embodiment, $Z_{R,final}^c$ is the fifth apparent impedance.

According to an embodiment, the method further comprises determining a fifth apparent impedance based on the third apparent impedance and the fourth apparent impedance, in particular on a first ratio of the third apparent impedance to a line impedance of the transmission line and a second ratio of the fourth apparent impedance to the line impedance of the transmission line, wherein the protection system is controlled based on the fifth apparent impedance.

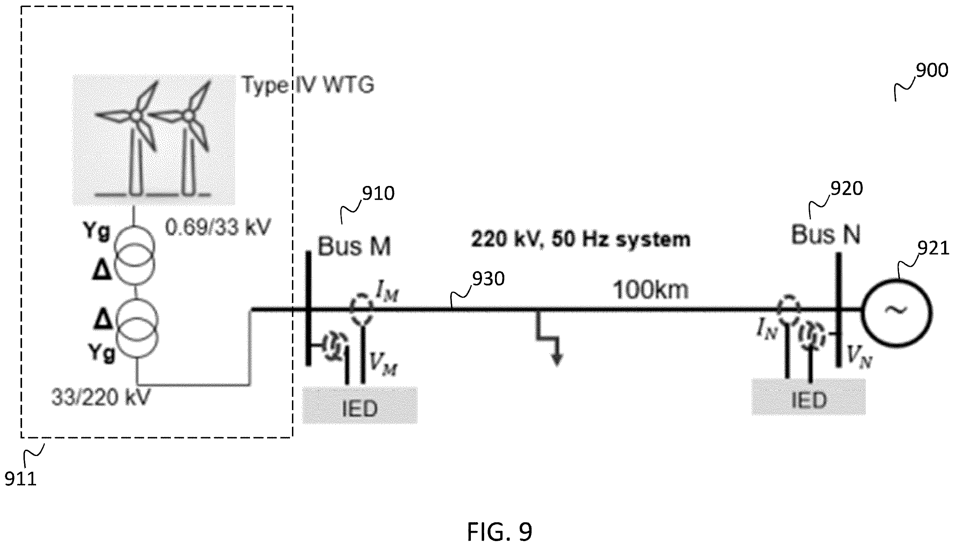

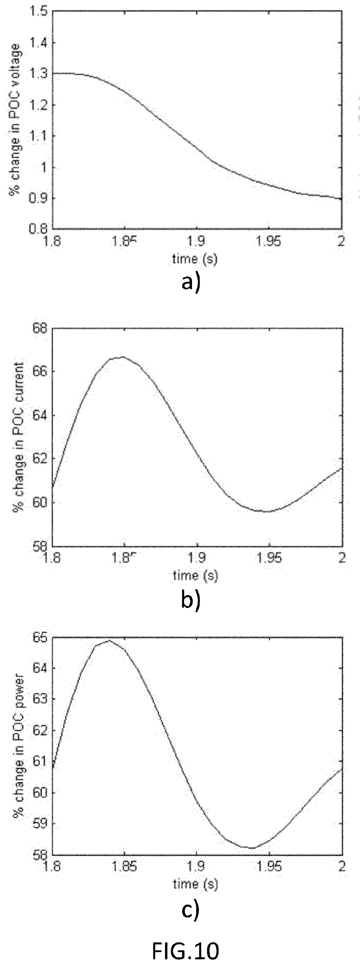

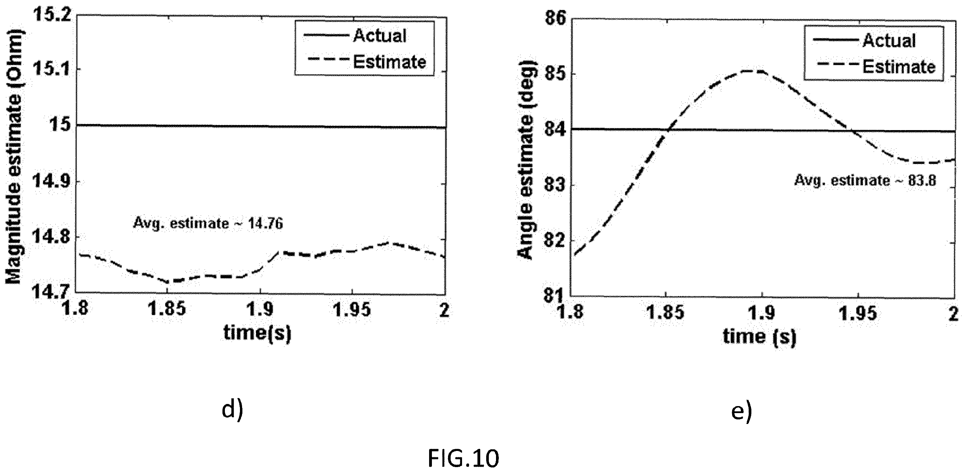

The above-described embodiment is illustrated with an exemplary electrical power system under test as shown in Fig.9. The electrical power system is modelled in power systems computer-aided design (PSCAD). The electrical power system 900 comprises protected power line 930 terminated by a first terminal, i.e., bus 'M' 910 coupled to a first power source, i.e., IBR system 911, and by a second terminal, i.e., bus 'N' 920 coupled to a second power source 921. Beyond bus 'N' 920, the remaining part of the second power source 921 may be modelled as a Thevenin equivalent (an equivalent combination of a constant voltage source coupled to a source impedance in series). The first source may be any of other unconventional power source, i.e., other than the IBR, a synchronous power source, or a grid comprising an unconventional power source and/or a synchronous power source. The second source may be a synchronous power source or a grid comprising a synchronous power source and/or an unconventional power source . Although omitted for simplicity, the electrical power system 900 may further comprise a relay 'R' which may be placed at, in, or on or associated with the terminal Bus 'M' 910. The relay 'R' may comprise measuring devices, in particular current and potential transformers (CT & PT), measuring voltage at and current through bus 'M' 910. The voltage at and current through bus 'M' 910 may also or otherwise be obtained, for instance by other measuring means. The electrical power system 900 comprises devices, in particular intelligent electronic devices (IEDs), each of which are be placed at, in, or on, or associated with Bus 'M' 910 and Bus 'M' 910, respectively. It is noted that the measurements obtained at and through bus 'N' 920 provide reference values (the data points labeled 'Actual' in Fig.10 to Fig.11) and are not used for the calculation of the final corrected apparent impedance $Z_{Rfinal}^c$ according to any one of the above-described embodiments. The IED may be the relay 'R'. The IED may be a computer-readable device being configured to perform the method of the embodiment shown in Fig.6. In reference to Fig.9, source impedance of the second power source 921 is referred to as a grid side source impedance.

Pre-fault analysis (grid side source impedance estimation):

For illustration purposes, the grid side source impedance is kept as 15∠84° Ohm. The followings are illustrated: (i) the calculation of grid side source impedance during an IBR event using ideal measurements in case of a single IBR event, as calculated at 624 and (ii) the estimation of grid side source impedance in case of a multiple IBR events using noisy measurements, as calculated at 625. Percentage thresholds for change in measured parameters of bus 'M' 910 are taken as: 0.2% for voltage, 5% for current and 5% for power, in order to trigger the calculation/estimation procedure. Fig.10 illustrates measurements at bus 'M' 910 and the grid side source impedances during a single event in the unconventional power source disclosed in Fig.9. In particular, Fig. 10a), b), and c) illustrate the % percentage in voltage, current and power measured at the POC bus 'M' 910 during a wind speed change event occurring at the IBR system 911. Fig.10d) and Fig.10e) illustrate the magnitude and angle of the grid side source impedance. The estimates are computed according to eq.(4)-(5). The average magnitude of the estimated grid side source impedance is approximately 14.76 Ω (1.6% error) and the average phase angle of the estimated grid side source impedance is approximately 83.8° (0.2% error).

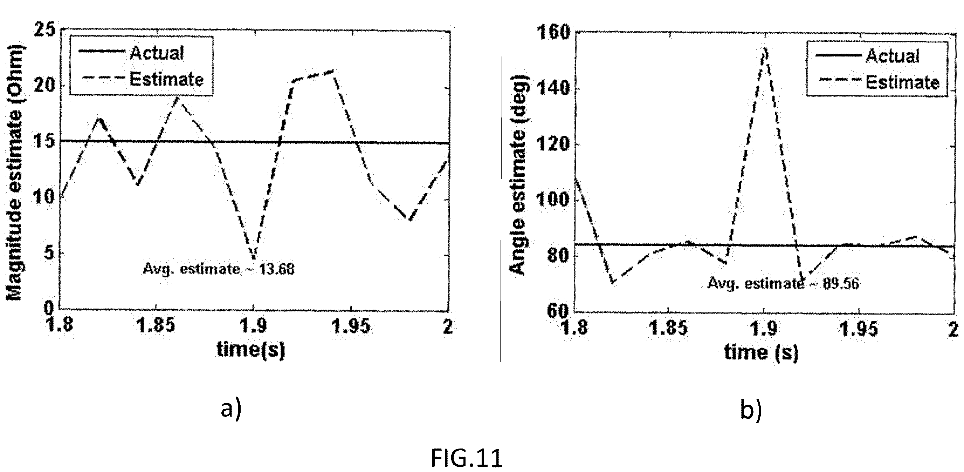

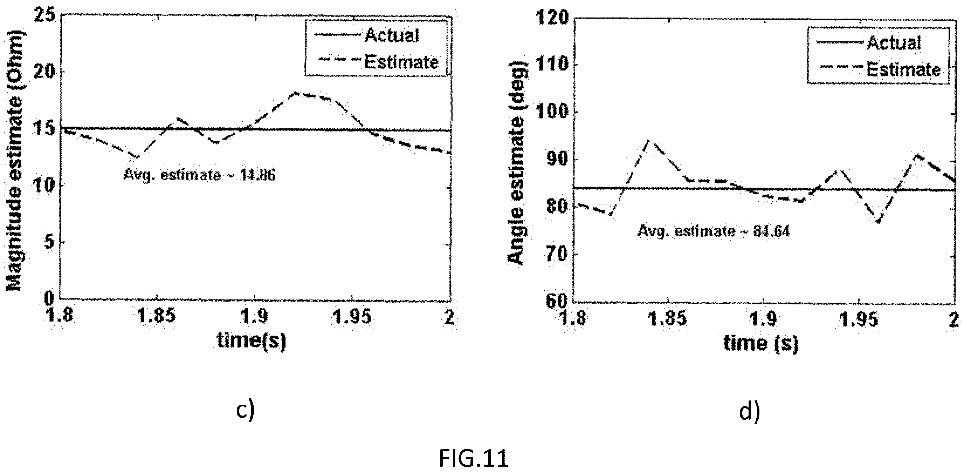

Fig.11 illustrates source impedances of a remote power source during multiple events in the unconventional power source disclosed in Fig.9 under noisy measurement condition. In particular, Fig.11a) & Fig.11b) illustrate the magnitude and angle of the grid side source impedance in case of a single IBR event. The estimates are computed according to eq.(4)-(5).

The average magnitude of the estimated grid source impedance is approximately 13.68 Ω (8.8% error) and the average phase angle of the estimates grid source impedance is approximately 89.56° (6.6% error). Fig.11c) & Fig.11d) illustrate the magnitude and angle of the grid side source impedance from a three IBR events. The estimates are computed based on the least square estimation procedure of eq.(6) using measurements from a set of three wind speed change events. The average magnitude of the estimated grid side source impedance is approximately 14.86 Ω (0.9% error) and the average phase angle of the estimated grid side source impedance is approximately 84.64° (0.8% error). Thus, the overall improvement in the estimation accuracy is observed.

Post-fault analysis (the final corrected apparent impedance calculation):

The distance relay (IED) at bus 'M' 910 and two fault scenarios are considered. In scenario 1, the grid side source impedance is considered to be homogeneous with respect to the line impedance and is kept as 15∠84° Ohm. A fault is simulated at a distance of 90 km from bus 'M'. In scenario 2, the grid side source impedance is considered to be not homogeneous and is kept as 15∠65° Ohm. A fault is simulated at a length of 75 km from bus 'M'. In each of these cases, the fault is considered to be arcing with resistance of 10 Ohm. It is desirable that the relay at bus 'M' should not detect the fault of scenario 1 in its Zone-1, while it should detect the fault of scenario 2 in Zone-1.

Scenario- 1:

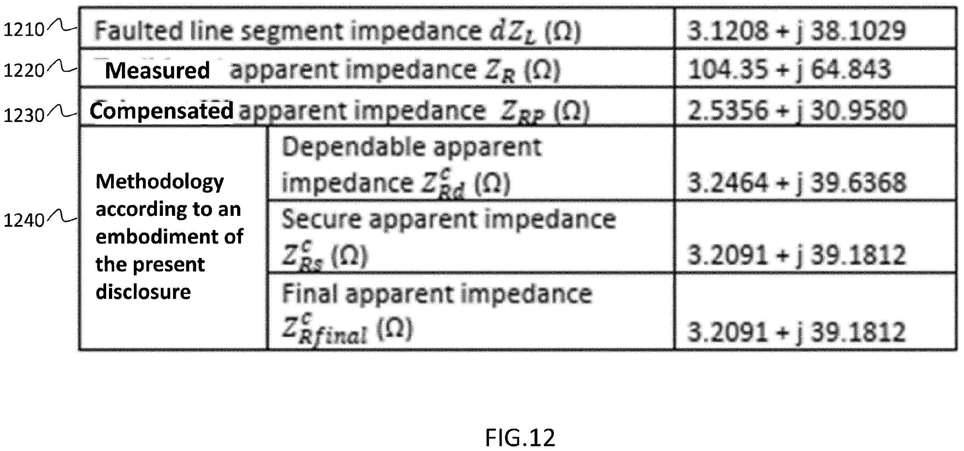

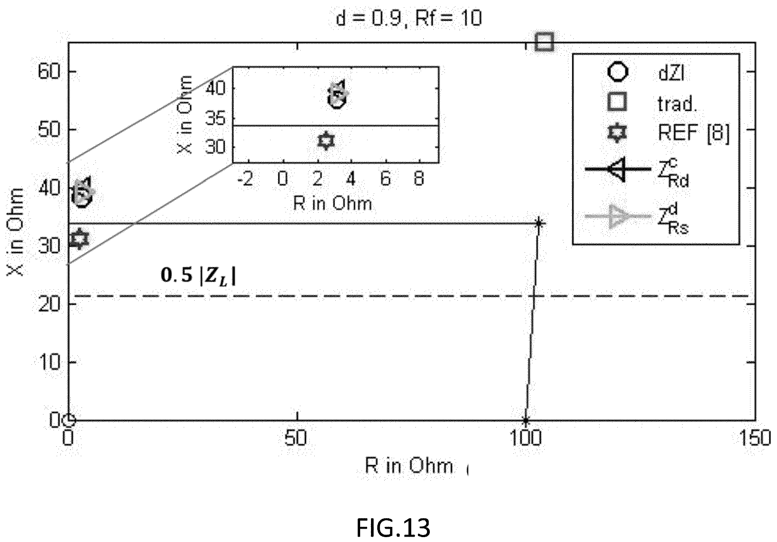

Fig.12 illustrates a summary of numerical results of the apparent impedances calculated according to various methods, including the method according to an embodiment of the present disclosure, for scenario-1. Fig.13 illustrates graphical representation of the apparent impedances calculated according to various methods, including the method according to an embodiment of the present disclosure, for scenario-1. In reference to Fig.12 and Fig.13, the measured apparent impedance 1220 falls out of Zone-1. However, the value of the apparent impedance is much higher than the faulted line segment impedance $dZ_l$ 1210. The compensated apparent impedance 1230 fails and overreaches (i.e., identifies the fault to be Zone-1 when it is actually not) for this fault. The compensated apparent impedance 1230 is computed by simplifying assumptions about the grid side source impedance relative to the IBR side source impedance The apparent impedances computed according to an embodiment of the present disclosure 1240 indicate the fault to be in the second half segment of the line and therefore the final solution is taken to be $Z^c_{Rfinal} = Z^c_{Rs}$, according to eq.(21), which lies outside of Zone-1. The methodology according to an embodiment of the present disclosure therefore correctly identifies the fault to be out of Zone-1 of the relay. Also, in reference to Fig.13, the final apparent impedance $Z^c_{Rfinal}$ computed according to an embodiment of the present disclosure is closely located to the faulted line segment impedance $dZ_l$ 1210, which indicates its higher accuracy in locating the fault.

Scenario- 2:

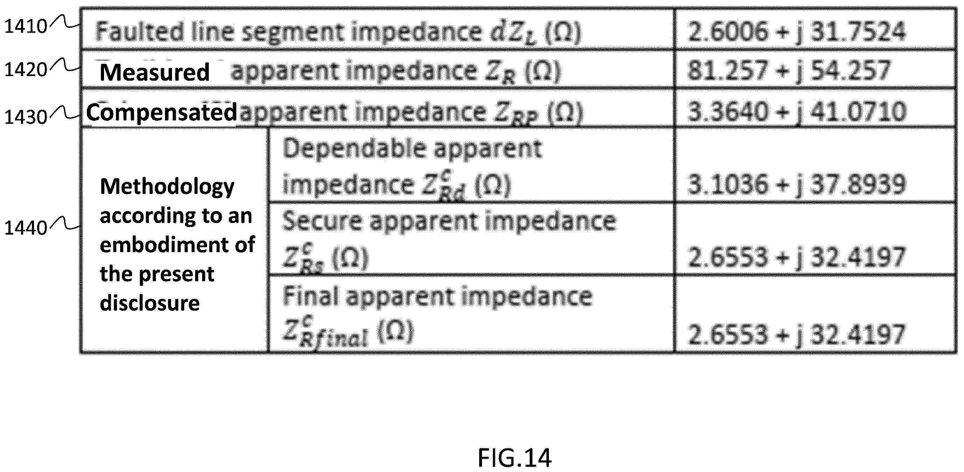

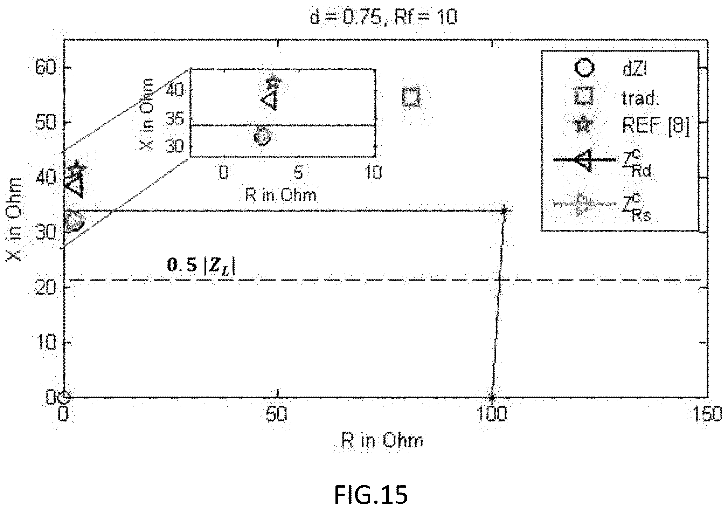

Fig.14 illustrates a summary of numerical results of the apparent impedances calculated according to various methods, including the method according to an embodiment of the present disclosure. Fig.15 illustrates graphical representation of the apparent impedances calculated according to various methods, including the method according to an embodiment of the present disclosure. In reference to Fig.14 and Fig.15, the measured apparent impedance 1420 calculation fails to detect the fault within relay Zone-1. The corrected apparent impedances computed according to an embodiment of the present disclosure 1440 calculated by the proposed method indicate the fault to be in the second half segment of the line and therefore the final solution is taken to be $Z^c_{Rfinal} = Z^c_{Rs}$ , according to eq.(21), which lies inside of Zone-1. The methodology according to an embodiment of the present disclosure therefore correctly identifies the fault within Zone-1 of the relay. Also, , in reference to Fig.13, the final apparent impedance value $Z^c_{Rfinal}$ computed according to an embodiment of the present disclosure is closely located to the faulted line segment impedance, which indicates its higher accuracy in locating the fault. In comparison, the compensated apparent impedance 1430 is inaccurate and underreaches (i.e., fails to detect the fault in Zone-1 when it actually is) for this fault.

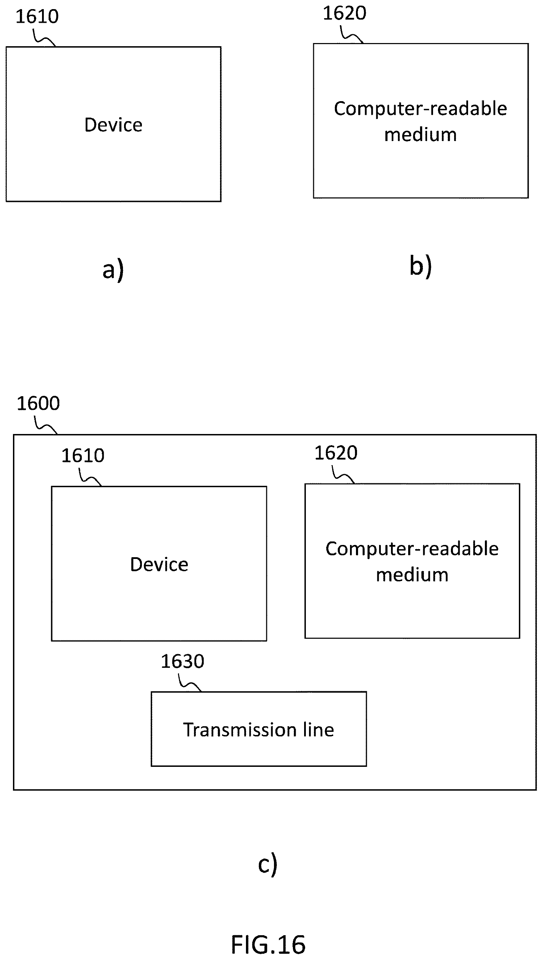

Fig.16 illustrates a device, a computer-readable medium, and an electrical power system according to an embodiment of the present disclosure.

The device 1610 is a device for controlling a protection system for an electrical power system comprising a transmission line terminated by a first terminal coupled to a first power source and by a second terminal coupled to a second power source, the device comprising a processor being configured to: obtain a plurality of voltage measurements and a plurality of current measurements of the first terminal; determine phase angle boundaries of a fault current based on the plurality of voltage measurements and the plurality of current measurements; determine a first apparent impedance based on a first phase angle within or at one of the phase angle boundaries starting from the first terminal; determine a second apparent impedance based on a second phase angle within or at one of the phase angle boundaries starting from the first terminal; determine a third apparent impedance and a fourth apparent impedance starting from the first terminal based on the first apparent impedance and the second apparent impedance; and control the protection system based on the third apparent impedance and the fourth apparent impedance.

According to an embodiment, the processor is further configured to perform the method of any one of the above-described embodiments.

The computer-readable medium 1620 is a device for controlling a protection system for an electrical power system, carrying instructions to perform the method of any one of the above-described embodiments.

The electrical power system 1600 comprising a transmission line 1630, the device 1610 of any one of the above-described embodiments, and a computer-readable medium 1620 of any one of the above-described embodiments.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for controlling a protection system for an electrical power system comprising a transmission line terminated by a first terminal coupled to a first power source and by a second terminal coupled to a second power source, the method comprising:

   obtaining a plurality of voltage measurements and a plurality of current measurements of the first terminal;
   determining phase angle boundaries of a fault current based on the plurality of voltage measurements and the plurality of current measurements;
   determining a first apparent impedance based on a first phase angle within or at one of the phase angle boundaries starting from the first terminal;
   determining a second apparent impedance based on a second phase angle within or at one of the phase angle boundaries starting from the first terminal;
   determining a third apparent impedance and a fourth apparent impedance starting from the first terminal based on the first apparent impedance and the second apparent impedance; and

controlling the protection system based on the third apparent impedance and the fourth apparent impedance.

2. The method of 1, wherein the phase angle boundaries are or comprise a minimum and a maximum phase angle of the fault current for a fault occurring within a segment of the transmission line between the first terminal and the second terminal.

3. The method of 1 or 2, wherein the first phase angle is determined based on a first parameter, in particular a preset distance between the first terminal and a first location on the transmission line, and wherein the second phase angle is determined based on a second parameter, in particular a preset distance between the first terminal and a second location on the transmission line different from the first location.

4. The method of any one of claims 1 to 3, wherein the first phase angle is the minimum phase angle of the fault current, and wherein the second phase angle is the maximum phase angle of the fault current.

5. The method of any one of claims 1 to 4, comprising determining a source impedance of the second power source based on the plurality of voltage measurements and the plurality of current measurements of the first terminal, wherein the determining the first apparent impedance and the determining the second apparent impedance are based on the source impedance of the second power source.

6. The method of claim 5, wherein the source impedance of the second power source is determined based on the plurality of voltage measurements and the plurality of current measurements obtained before a fault instance.

7. The method of any one of claims 1 to 6, wherein the first power source is one of a grid, a synchronous power source, an unconventional power source, in particular an inverter based resource, and wherein the second power source is a synchronous power or a grid with at least one synchronous power source and/or at least one unconventional power source.

8. The method of any one of claims 1 to 7, comprising determining an impedance of the first power source after a fault instance based on the plurality of voltage measurements and the plurality of current measurements obtained before and after the fault instance, wherein determining the first apparent impedance and the second apparent impedance are based on the impedance of the first power source.

9. The method of any one of claims 1 to 8, wherein the determining the third apparent impedance and the fourth apparent impedance is or comprises summing the first apparent impedance and the second apparent impedance, in particular linearly, more particularly with a first weight scaling the first apparent impedance and a second weight scaling the second apparent impedance, wherein the first weight is different from the second weight.

10. The method of any one of claims 1 to 9, comprising determining a fifth apparent impedance based on the third apparent impedance and the fourth apparent impedance, in particular on a first ratio of the third apparent impedance to a line impedance of the transmission line and a second ratio of the fourth apparent impedance to the line impedance of the transmission line, wherein the protection system is controlled based on the fifth apparent impedance.

11. The method of any one of claims 1 to 10, wherein at least one voltage measurement of the plurality of voltage measurements of the first terminal is measured before a fault instance and/or at least one voltage measurement of the plurality of voltage measurements of the first terminal is measured after the fault instance.

12. The method of any one of claims 1 to 11, wherein at least one current measurement of the plurality of current measurements of the first terminal is measured before a fault instance and/or at least one current measurement of the plurality of current measurements of the first terminal is measured after the fault instance.

13. A device for controlling a protection system for an electrical power system comprising a transmission line terminated by a first terminal coupled to a first power source and by a second terminal coupled to a second power source, the device comprising a processor being configured to:

obtain a plurality of voltage measurements and a plurality of current measurements of the first terminal;
determine phase angle boundaries of a fault current based on the plurality of voltage measurements and the plurality of current measurements;
determine a first apparent impedance based on a first phase angle within or at one of the phase angle boundaries starting from the first terminal;

determine a second apparent impedance based on a second phase angle within or at one of the phase angle boundaries starting from the first terminal;

determine a third apparent impedance and a fourth apparent impedance starting from the first terminal based on the first apparent impedance and the second apparent impedance; and

control the protection system based on the third apparent impedance and the fourth apparent impedance.

14. The device of claim 13, wherein the processor is further configured to perform the method of any one of claims 2 to 12.

15. A computer-readable medium, for controlling a protection system for an electrical power system, carrying instructions to perform the method of any one of claims 1 to 12.

FIG.1

EP 4 318 836 A1

FIG.2

FIG.3

SG-connected system

$$Z_{Ag} = Z_F + R_F \left( \frac{I_F}{I_{AM} + K_0 I_0} \right)$$

$$Z_{Ag} = 0.2Z_1 + 20 \left( \frac{1.81 - 13.52i}{2.63 - 12.01i} \right)$$

$$= 0.2Z_1 + (22.11 - 1.83i)$$

$$= (22.83 + 8.32i)$$

IBR-connected system

$$Z_{Ag} = Z_F + R_F \left( \frac{I_F}{I_{AM} + K_0 I_0} \right)$$

$$Z_{Ag} = 0.2Z_1 + 20 \left( \frac{0.81 - 1.30i}{1.42 - 0.13i} \right)$$

$$= 0.2Z_1 + (13.11 - 16.99i)$$

$$= (13.83 - 6.84i)$$

FIG.4

```
┌─────────────────────────────────────────────────┐
│  obtaining a plurality of voltage measurements   │
│  and a plurality of current measurements of the  │
│  first terminal                                  │
└─────────────────────────────────────────────────┘
```
S501

```
┌─────────────────────────────────────────────────┐
│  determining phase angle boundaries of a fault   │
│  current based on the plurality of voltage       │
│  measurements and the plurality of current       │
│  measurements                                    │
└─────────────────────────────────────────────────┘
```
S502

```
┌─────────────────────────────────────────────────┐
│  determining a first apparent impedance based    │
│  on a first phase angle within or at one of the  │
│  phase angle boundaries starting from the first  │
│  terminal                                        │
└─────────────────────────────────────────────────┘
```
S503

```
┌─────────────────────────────────────────────────┐
│  determining a second apparent impedance based   │
│  on a second phase angle within or at one of the │
│  phase angle boundaries starting from the first  │
│  terminal                                        │
└─────────────────────────────────────────────────┘
```
S504

```
┌─────────────────────────────────────────────────┐
│  determining a third apparent impedance and a    │
│  fourth apparent impedance starting from the     │
│  first terminal based on the first apparent      │
│  impedance and the second apparent impedance     │
└─────────────────────────────────────────────────┘
```
S505

```
┌─────────────────────────────────────────────────┐
│  controlling the protection system based on the  │
│  third apparent impedance and the fourth         │
│  apparent impedance                              │
└─────────────────────────────────────────────────┘
```
S506

FIG.5

FIG.6a)

629

612

616

IBR event
detected?

No

621

Yes

$|\Delta V|, |\Delta I|, |\Delta P|$ at
POC bus>thresholds

No

Pre-fault
analyses

622

Yes

Calculate $\Delta V$, $\Delta I$ at
grid side bus

623

Single
event

Multiple
events

Calculate grid-side
source impedance

Estimate grid-side
source impedance

624

625

Output grid-side
source impedance

628

620

FIG.6b)

FIG.7

EP 4 318 836 A1

$Z_{1L}$

$Z_{1L} + Z_{1G}$

Denominator of CDF (7.7)
$\theta_d = \angle(1-d)Z_{1L} + Z_{1G}$

$\theta_d^{max}$

$Z_{1G}$

$\theta_d^{min}$

FIG.8

EP 4 318 836 A1

**FIG. 9**

a)

b)

c)

FIG.10

d)

e)

FIG.10

EP 4 318 836 A1

FIG.11

c)

d)

FIG.11

EP 4 318 836 A1

| | | | |
|---|---|---|---|
| Faulted line segment impedance $dZ_L$ ($\Omega$) | | | $3.1208 + j\, 38.1029$ |
| Measured apparent impedance $Z_R$ ($\Omega$) | | | $104.35 + j\, 64.843$ |
| Compensated apparent impedance $Z_{RP}$ ($\Omega$) | | | $2.5356 + j\, 30.9580$ |
| Methodology according to an embodiment of the present disclosure | Dependable apparent impedance $Z_{Rd}^c$ ($\Omega$) | | $3.2464 + j\, 39.6368$ |
| | Secure apparent impedance $Z_{Rs}^c$ ($\Omega$) | | $3.2091 + j\, 39.1812$ |
| | Final apparent impedance $Z_{Rfinal}^c$ ($\Omega$) | | $3.2091 + j\, 39.1812$ |

FIG.12

EP 4 318 836 A1

FIG.13

| | | | |
|---|---|---|---|
| Faulted line segment impedance $dZ_L$ ($\Omega$) | | | $2.6006 + j\,31.7524$ |
| Measured apparent impedance $Z_R$ ($\Omega$) | | | $81.257 + j\,54.257$ |
| Compensated apparent impedance $Z_{RP}$ ($\Omega$) | | | $3.3640 + j\,41.0710$ |
| Methodology according to an embodiment of the present disclosure | Dependable apparent impedance $Z_{Rd}^c$ ($\Omega$) | | $3.1036 + j\,37.8939$ |
| | Secure apparent impedance $Z_{Rs}^c$ ($\Omega$) | | $2.6553 + j\,32.4197$ |
| | Final apparent impedance $Z_{Rfinal}^c$ ($\Omega$) | | $2.6553 + j\,32.4197$ |

FIG.14

EP 4 318 836 A1

**FIG.15**

1610

Device

a)

1620

Computer-readable medium

b)

1600

1610

Device

1620

Computer-readable medium

1630

Transmission line

c)

FIG.16

Europäisches
Patentamt

European
Patent Office

Office européen
des brevets

# EUROPEAN SEARCH REPORT

Application Number

EP 22 19 6436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/021878 A1 (SAHA MURARI [SE] ET AL) 22 January 2009 (2009-01-22) | 1-4,8-15 | INV. H02H3/40 H02H1/00 H02H7/28 |
| A | * paragraphs [0003], [0020] - [0030]; figures 1,2 * | 5,6 | |
| X | MISHRA PRIYANKA ET AL: "Adaptive Distance Relaying for Distribution Lines Connecting Inverter-Interfaced Solar PV Plant", IEEE TRANSACTIONS ON INDUSTRIAL ELECTRONICS, IEEE SERVICE CENTER, PISCATAWAY, NJ, USA, vol. 68, no. 3, 26 February 2020 (2020-02-26), pages 2300-2309, XP011821871, ISSN: 0278-0046, DOI: 10.1109/TIE.2020.2975462 [retrieved on 2020-11-25] * Section II, III; figures 2,6 * | 1,7,8, 11-15 | |
| X | US 3 374 399 A (DEWEY CLYDE G) 19 March 1968 (1968-03-19) * column 6, line 25 - column 7, line 56; figures 1,2 * | 1 | TECHNICAL FIELDS SEARCHED (IPC) H02H G01R |

The present search report has been drawn up for all claims

| Place of search | Date of completion of the search | Examiner |
|---|---|---|
| Munich | 8 August 2023 | Colombo, Alessandro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 6436

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2023

| Patent document cited in search report | | Publication date | Patent family member(s) | | Publication date |
|---|---|---|---|---|---|
| US 2009021878 | A1 | 22-01-2009 | CN | 101336503 A | 31-12-2008 |
| | | | EP | 1982395 A1 | 22-10-2008 |
| | | | US | 2009021878 A1 | 22-01-2009 |
| | | | WO | 2007090484 A1 | 16-08-2007 |
| US 3374399 | A | 19-03-1968 | NONE | | |

EPO FORM P0459

For more details about this annex : see Official Journal of the European Patent Office, No. 12/82